(19)

**Europäisches Patentamt**
**European Patent Office**
**Office européen des brevets**

(11) **EP 4 664 113 A1**

(12) **EUROPEAN PATENT APPLICATION**

(43) Date of publication:
**17.12.2025 Bulletin 2025/51**

(21) Application number: **24382639.3**

(22) Date of filing: **13.06.2024**

(51) International Patent Classification (IPC):
$G01P\ 5/10^{(2006.01)}$ $\quad$ $G01P\ 5/12^{(2006.01)}$
$G01P\ 13/02^{(2006.01)}$ $\quad$ $G01F\ 1/684^{(2006.01)}$
$G01F\ 1/69^{(2006.01)}$ $\quad$ $G01P\ 13/00^{(2006.01)}$

(52) Cooperative Patent Classification (CPC):
**G01P 5/10; G01F 1/6845; G01F 1/692; G01P 5/12; G01P 13/02; G01P 13/025;** G01P 13/006

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Universitat Politècnica De Catalunya**
  **08034 Barcelona (ES)**
• **Sener Aeroespacial S.A.U.**
  **48930 Getxo - Vizcaya (ES)**

(72) Inventors:
• **DOMÍNGUEZ PUMAR, Manuel Maria**
  **08034 Barcelona (ES)**
• **MANYOSA VILARDELL, Xavier**
  **08034 Barcelona (ES)**
• **SOLÀ PEÑAFIEL, Nil**
  **08034 Barcelona (ES)**
• **BLANCO ARNAO, Gonzalo**
  **28760 Tres Cantos (ES)**
• **SANCHO PONCE, Jorge**
  **28760 Tres Cantos (ES)**
• **QUITIÁN HERNÁNDEZ, Lara**
  **28760 Tres Cantos (ES)**

(74) Representative: **Torner, Juncosa I Associats, SL**
  **C / Pau Claris, 108, 1r 1a**
  **08009 Barcelona (ES)**

(54) **A METHOD AND A DEVICE FOR TWO-DIMENSIONAL LOCAL FLUID FLOW MEASUREMENT OVER SURFACES**

(57) A method and a device for two-dimensional local fluid flow measurement over surfaces are provided. The method comprises providing a device having a set of micro-structures forming a matrix structure, each one of the micro-structures comprising a membrane with an embedded temperature sensitive resistive device; arranging the device over a target surface; measuring, by an electronic unit of the device, a thermal impedance of each one of the micro-structures in the frequency domain; and obtaining, by the electronic unit, a velocity and angle of incidence of a local fluid flow on the target surface using an inverse algorithm that uses the measured thermal impedances.

Fig. 1

EP 4 664 113 A1

**Description**

TECHNICAL FIELD

The present invention generally relates to a method and a device for two-dimensional local fluid flow measurement over surfaces.

BACKGROUND OF THE INVENTION

Two-dimensional micromachined fluid flow sensors are subject of great interest due to their low power consumption compared to non-miniaturized thermal fluid flow sensors, robustness compared to mechanical anemometers (which are prone to wear), and small size and mass. These sensors are described in depth in document [1], which presents an overview of 2D micromachined wind sensors, and it separates them in three different categories: Calorimetric wind sensors, which detects changes in the temperature gradient distribution on the surface of the sensor chip to measure the wind velocity and direction; time-of-flight wind sensors, which measures the time of flight of the wind between a heater element and a temperature sensitive element to be able to obtain velocity and direction; and Hot-wire or Hot-film anemometry.

Hotwire anemometry can be traced back to 1905 [2]. It is a very well-known technique in which a heated wire, made of a temperature dependent resistive material, is exposed to the wind. The sensor can be operated in different modes. In the case of constant current operation (CCA) a constant current is applied to the wire. The output signal is the generated voltage, which will depend on the temperature of the wire, and therefore on the airflow velocity and the air temperature. Alternatively, under constant temperature operation (CTA), the wire is kept at constant temperature and the output signal is the current/voltage, or power, needed to keep it constant. In all these cases, the measurement needs an independent air temperature measurement.

Document [3] describes an absolute hot-wire anemometry method. The object of the method is to measure the thermal impedance of a sensor at a certain frequency, $\omega$. Consequently, it does not perform an independent measurement of the air temperature. Particularly, in [3] the $3\omega$ method is used (i.e. a sinusoidal current excitation (at frequency $\omega$) is applied to a hotwire). The power injection in the hotwire has therefore a harmonic at frequency $2\omega$. This harmonic generates a harmonic at the same frequency in the temperature, which is detected by the temperature-dependent hotwire. The current injection at frequency $\omega$, and the harmonic at frequency $2\omega$ in the resistance, generates a $3\omega$ harmonic. From this harmonic the convection coefficient is retrieved. Compared with this work, the authors use a hotwire structure (much larger than the solution proposed by the present invention) and they are not able to provide a two-dimensional (2D) measurement. Additionally, the sensor would be very invasive on any surface.

Moreover, document [4] describes a full 2D MEMS-based hot film sensor, in which three silicon-crystalline MEMS membranes embedded in a cylinder are used to provide 2D wind sensing. This solution is not miniaturized (a cylinder is needed to embed the sensors) and is highly invasive if placed on a surface. Additionally, the measurement depends on the air temperature (they use constant temperature anemometry).

Finally, patent ES2342953B1 describes a 2D hot film sensor working under constant temperature anemometry. The sensor uses 5 silicon dice with embedded resistors in which one of the dice is used to have a reference of the air temperature (cold die) and the other four dice are kept at a constant temperature difference (CTD) with regard to the cold die. The method uses the power differences of the hot dice (North-South and East-West) to infer wind velocity and angle. However, any difference between the temperature of the air and the cold die temperature results in different power differences and, therefore, errors in wind prediction. Therefore, contrary to the present invention, the measurement needs an independent accurate air temperature measurement.

DESCRIPTION OF THE INVENTION

An object of the present invention is to measure the local fluid velocity and direction in two dimensions on surfaces.

To that end, embodiments of the present invention provide a method for two-dimensional local fluid flow measurement over surfaces, comprising providing a device having a set of micro-structures forming a matrix structure, each one of the micro-structures comprising a membrane with an embedded temperature sensitive resistive device; arranging the device over a target surface; measuring, by an electronic unit of the device, a thermal impedance of each one of the micro-structures in the frequency domain; and obtaining, by the electronic unit, a velocity and angle of incidence of a local fluid flow on the target surface using an inverse algorithm that uses the measured thermal impedances.

Embodiments of the present invention also provide, according to another aspect, a device for two-dimensional local fluid flow measurement over surfaces. The device comprises a set of micro-structures forming a matrix structure, each one of the micro-structures comprising a membrane with an embedded temperature sensitive resistive device; and an electronic unit configured to measure a thermal impedance of each one of the micro-structures in the frequency domain and to obtain a velocity and angle of incidence of a local fluid flow on a target surface on which the device is arranged using an inverse algorithm that uses the measured thermal impedances

In some embodiments, the matrix structure has a rotation symmetry.

In some embodiments, the set of micro-structures comprises four micro-structures.

In some embodiments, the micro-structures comprises microelectromechanical systems (MEMS).

In some embodiments, the device comprises a two-dimensional anemometer.

Consequently, the present invention is based on the measurement of the thermal impedance in the frequency domain of a matrix structure of a set of micro-structures. Particularly, the matrix structure has a rotation symmetry allowing to obtain local fluid velocity and angle of incidence using differential combinations of the thermal impedance, in the frequency domain, of the micro-structures.

BRIEF DESCRIPTION OF THE DRAWINGS

The previous and other advantages and features will be more fully understood from the following detailed description of embodiments, with reference to the attached figures, which must be considered in an illustrative and non-limiting manner, in which:

Fig. 1 illustrates the set of micro-structures that can be used in the proposed device. Wire bonding bring the signals from the micro- structures to a supporting Printed Circuit Board (PCB).

Fig. 2 is a block diagram showing an embodiment of the electronic unit of the proposed device used for measuring the thermal impedance of each micro-structure, according to an embodiment.

Fig. 3 graphically illustrates some example waveforms obtained by the proposed method. Specifically, top-left image shows the temperature evolution, top-right image shows the FFT of the temperature waveform, bottom-left image shows the instantaneous power injected, and bottom-right image shows the FFT of the power. The value of Z(f) is obtained by dividing the values at f=500Hz, of the FFT(T) and FFT(P).

Fig. 4 graphically illustrates the thermal impedance in the frequency domain obtained by exposing a single micro-structure to five different wind velocities.

Fig. 5 schematically shows another embodiment of the matrix structure.

Fig. 6 is a polar plot of the inverse algorithm on the matrix structure, calculated at the frequency range 16-20Hz for different wind velocities and angle of incidence differences of 90°.

Figs. 7A and 7B are polar plots of the result of the inverse algorithm in which the fluid flow velocity is constant, and the sensor matrix is rotated continuously in time.

Figs. 8A and 8B are plots of the angle of incidence estimator in the experiments of Figs. 7A and 7B. It is important to note that different directions of rotation where applied (clockwise and counter-clockwise), that is the reason why there are two angle evolution directions.

Figs. 9A and 9B are plots of the wind velocity estimator in the experiments of Figs. 7A and 7B.

DETAILED DESCRIPTION OF THE INVENTION AND OF PREFERRED EMBODIMENTS

Present invention provides a device (or sensor), particularly, a 2D anemometer, designed for measuring in-plane wind speed and direction. The device, which could be modelled as a hot film anemometry sensor, comprises an electronic unit and a set of independent micro-structures, which in some embodiments are arranged to collectively create a square perimeter, though other geometric shapes are also feasible.

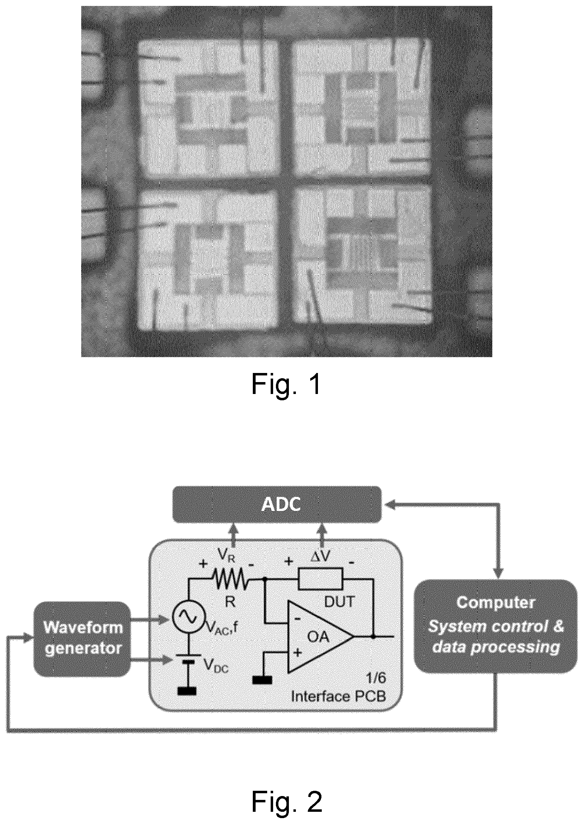

Fig. 1 shows an embodiment of the set of micro-structures. Particularly, in this embodiment, the set is comprised of four separate micro-structures, not limitative as the possibility of a different number of micro-structures is not ruled out. Each micro-structure includes a membrane with an embedded temperature sensitive resistive device or material, such as a resistor. Likewise, the micro-structures find support on a substrate, facilitating their attachment and enabling the establishment of electrical connections to the embedded temperature sensitive resistive device.

Through the electronic unit, the proposed device can measure the thermal impedance in the frequency domain for each membrane within the matrix structure using the following equation:

$$Z_{th}(f) = \frac{T(f)}{P(f)}$$

where T(f) is the temperature of the membrane (amplitude and phase) and P(f) is a power injected into the membrane (amplitude and phase).

Fig. 2 shows an embodiment of the electronic unit. Particularly, it injects a current into the temperature sensitive resistive device of one of the membranes:

$$i_{DUT}(t) = \frac{V_{DC} + V_{AC}\cos(\omega t)}{R}.$$

Similarly, the value of the temperature sensitive resistive device, $R_{DUT}$, can be obtained as:

$$R_{DUT}(t) = \frac{\Delta V(t)}{i_{DUT}(t)},$$

where $\Delta V(t)$ is the voltage drop across the temperature sensitive resistive device.

Finally, the temperature of the membrane can be calculated taking into account the temperature coefficient of the temperature sensitive resistive device, $\alpha[°C^{-1}]$, and its value at a reference temperature, for example, $T_0 = 0°C$:

$$T_{DUT}(t) = \frac{1}{\alpha}\left(\frac{R_{DUT}(t)}{R_0} - 1\right) + T_0,$$

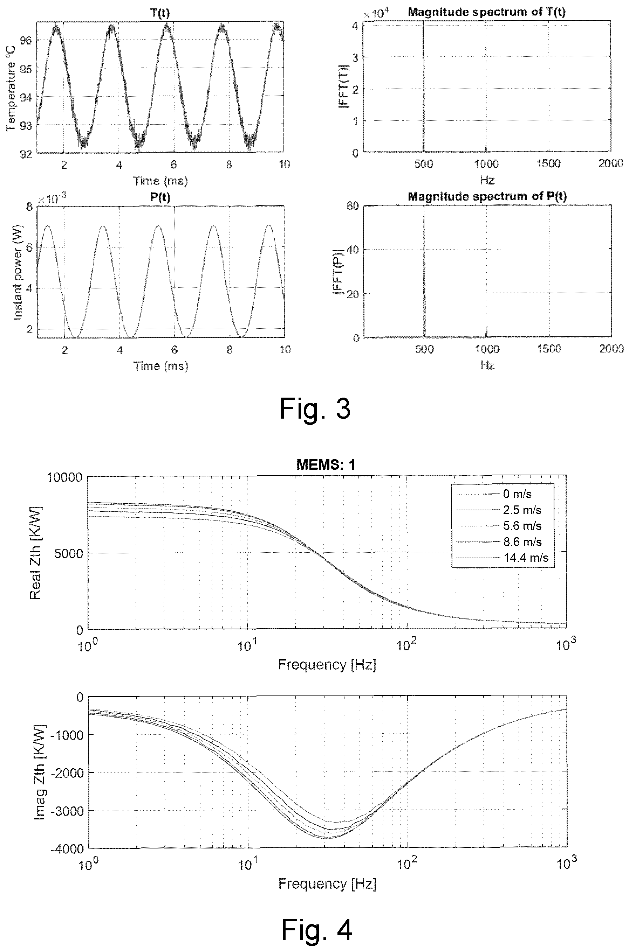

where $R_0$ is the resistance value of the temperature sensitive resistive device at the reference temperature. The injected instantaneous power can be calculated as: $P_{DUT}(t) = i_{DUT}^2(t)R_{DUT}(t)$. The thermal impedance can be calculated from the values of the Fast Fourier Transform of the temperature and power waveforms, at the operation frequency, $\omega$. In Fig. 3 the temperature and power waveforms, and their corresponding FFTs, obtained during an experiment at a frequency of 500Hz are showed.

Fig. 4 shows an example of the thermal impedance in the frequency domain, obtained by exposing a single membrane to five different wind velocities.

With regard to the inference of the fluid flow, to obtain a fast device response, in some embodiments, an operating frequency $f_0$ is chosen, as high as possible, such that the device response is maximum (taking into account both real and imaginary responses). In the case of the device used in Fig. 4, frequencies in the range 10-30Hz have high sensitivity in the imaginary part. To this effect, in the example figures, a frequency of 17Hz has been chosen, and the imaginary part of the impedance will be used. In a general case, to estimate the angle of incidence of the wind, the following estimators can be considered:

$$Z_{th'}(i) = s_0 Z_{th}(i) \qquad s_0 \text{ and } Z_{th}(i) \in \mathbb{C}$$

where $z_{th}(i)$ is the thermal impedance of membrane i, measured at the operating frequency selected, $f_0$, and $s_0$ is a constant complex number, allowing the selection of the desired combination of real and imaginary parts.

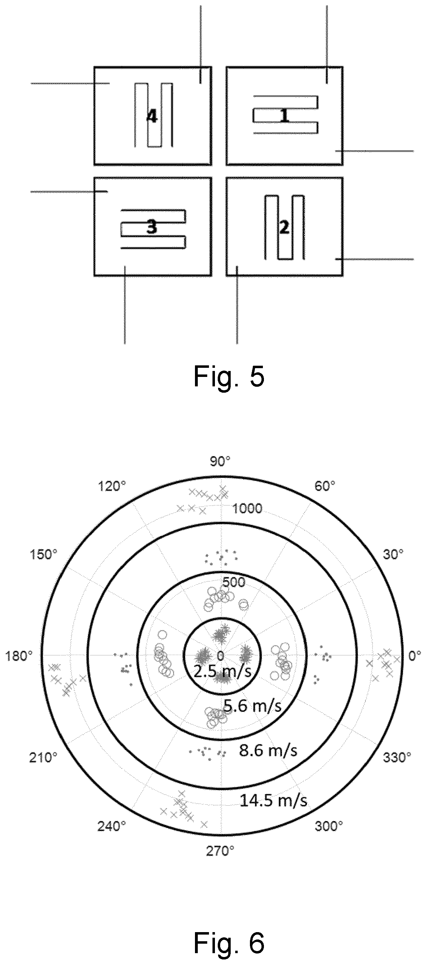

Fig. 5 illustrates another embodiment of the matrix structure.

In an embodiment of 4 devices with a square geometrical form (as in Fig. 5), to obtain the inference of the fluid flow, two estimators could be defined as:

$$E1 = \frac{1}{2}\frac{Imag(Z_{th'}(1)) - Imag(Z_{th'}(2)) - Imag(Z_{th'}(3)) + Imag(Z_{th'}(4)) - E1_0}{\sqrt{(Imag(Z_{th'}(1)) - Z_{av})^2 + (Imag(Z_{th'}(2)) - Z_{av})^2 + (Imag(Z_{th}'(3)) - Z_{av})^2 + (Imag(Z_{th'}(4)) - Z_{av})^2}}$$

$$E2 = \frac{1}{2}\frac{Imag(Z_{th'}(1)) + Imag(Z_{th'}(2)) - Imag(Z_{th'}(3)) - Imag(Z_{th'}(4)) - E2_0}{\sqrt{(Imag(Z_{th'}(1)) - Z_{av})^2 + (Imag(Z_{th'}(2)) - Z_{av})^2 + (Imag(Z_{th'}(3)) - Z_{av})^2 + (Imag(Z_{th'}(4)) - Z_{av})^2}}$$

Being:

$$Z_{av} = \left(Imag\big(Z_{th'}(1)\big) + Imag\big(Z_{th'}(2)\big) + Imag\big(Z_{th'}(3)\big) + Imag\big(Z_{th'}(4)\big)\right)/4.$$

$E1_0$ and $E2_0$ can be obtained in a calibration process at zero wind:

$$E1_0 = Imag\big(Z_{th'}(1)\big) - Imag\big(Z_{th'}(2)\big) - Imag\big(Z_{th'}(3)\big) + Imag\big(Z_{th'}(4)\big)$$

$$E2_0 = Imag\big(Z_{th'}(1)\big) + Imag\big(Z_{th'}(2)\big) - Imag\big(Z_{th'}(3)\big) - Imag\big(Z_{th'}(4)\big).$$

A third estimator for wind velocity can be further obtained from:

$$E_U = \left| \sqrt{Imag\big(Z_{th'}(1)\big)^2 + Imag\big(Z_{th'}(2)\big)^2 + Imag\big(Z_{th'}(3)\big)^2 + Imag\big(Z_{th'}(4)\big)^2} - E_{U0} \right|$$

Being

$$E_{U0} = \sqrt{Imag\big(Z_{th'}(1)\big)^2 + Imag\big(Z_{th'}'(2)\big)^2 + Imag\big(Z_{th'}(3)\big)^2 + Imag\big(Z_{th'}(4)\big)^2}$$

at wind = 0.

Then, the angle of incidence can be obtained by $\theta$ = *Angle* ($E1$ - $i\,E2$).

Fig. 6 shows an example of the inverse algorithm applied on measures obtained for different fluid flow velocities and four angles of incidence. As it can be seen, angle and fluid flow velocity can be distinguished.

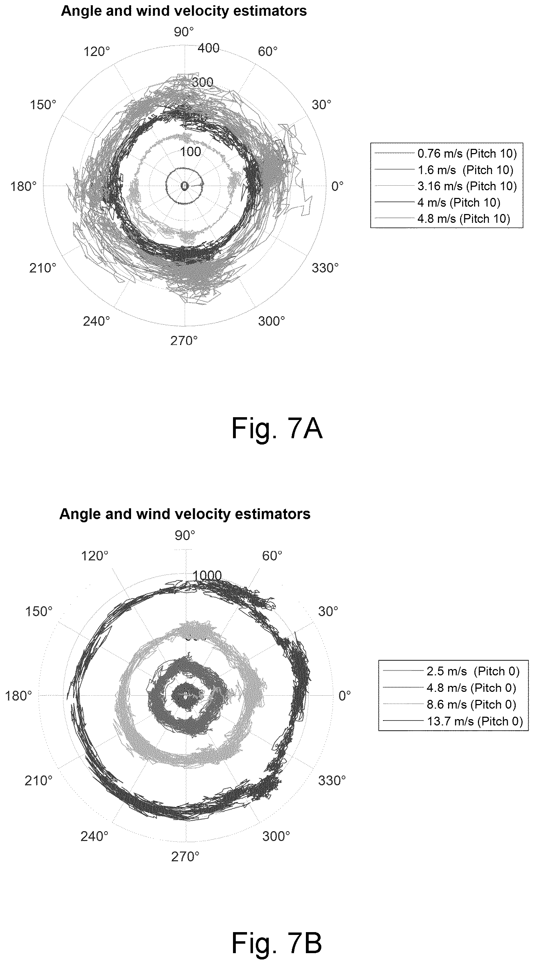

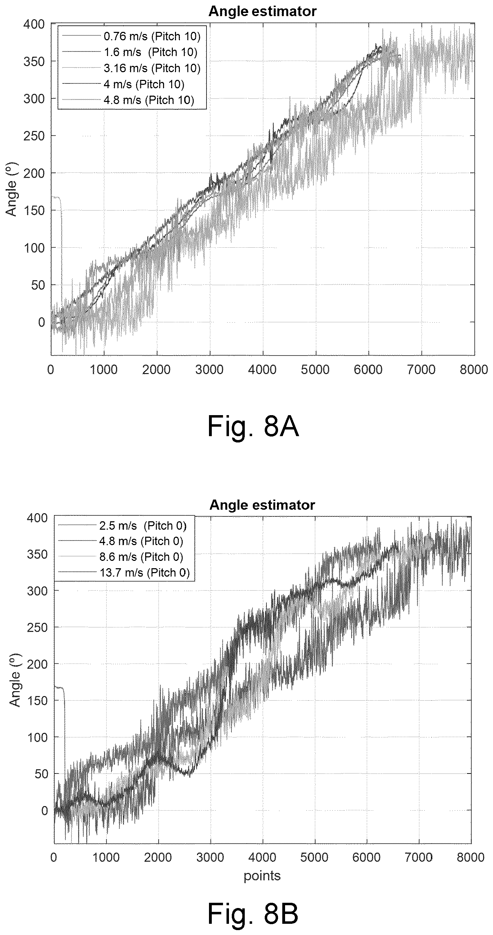

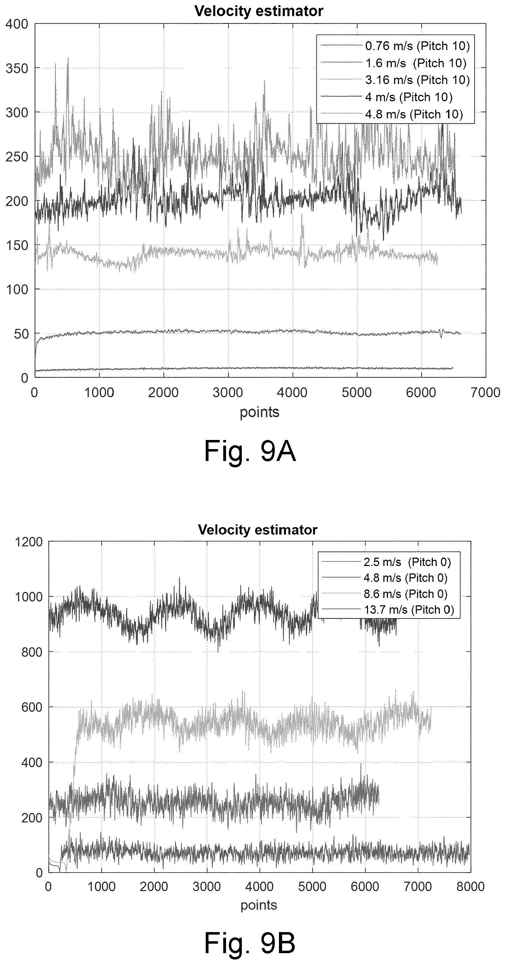

Figs. 7A-B, 8A-B, 9A-B show the result of the inverse algorithm applied on measures at different wind velocities (0.7 - 13.7 m/s) and pitch angle (0° and 10°), where the device platform was rotated 360° during the measurement at one single frequency.

The scope of the present invention is defined in the claims that follow.

References:

[1] Zhu, Yanqing, et al. "2-D micromachined thermal wind sensors-A review." IEEE Internet of Things Journal 1.3 (2014): 216-232.

[2] Stainback, P., and K. Nagabushana, 1993: Review of hot-wire anemometry techniques and the range of their applicability for various flows. Electron. J. Fluid Eng. Trans. ASME, 167, 1-54.

[3] Heyd, Rodolphe, et al. "Development of absolute hot-wire anemometry by the 3ω method." Rev. Sci. Instrum., vol. 81, no. 4, 1 Apr. 2010, doi:10.1063/1.3374015.

[4] Liu, Hao-Bing, et al. "High Sensitivity, Miniature, Full 2-D Anemometer Based on MEMS Hot-Film Sensors." IEEE Sens. J., vol. 13, no. 5, 21 Dec. 2012, pp. 1914-20, doi:10.1109/JSEN.2012.2236014.

[5] Domínguez-Pumar, M., et al. "Spherical probe for the thermophysical characterization of regoliths for planetary exploration using frequency methods." Sens. Actuators, A, vol. 348, 1 Dec. 2022, p. 114018, doi:10.1016/j.sna.2022.114018.

**Claims**

1. A method for two-dimensional local fluid flow measurement over surfaces, comprising:

providing a device having a set of micro-structures forming a matrix structure, each one of the micro-structures comprising a membrane with an embedded temperature sensitive resistive device;

arranging the device over a target surface;

measuring, by an electronic unit of the device, a thermal impedance of each one of the micro-structures in the frequency domain; and

obtaining, by the electronic unit, a velocity and angle of incidence of a local fluid flow on the target surface using an inverse algorithm that uses the measured thermal impedances.

2. The method of claim 1, wherein the matrix structure has a rotation symmetry.

3. The method of claim 1 or 2, wherein the set of micro-structures comprises four micro-structures.

4. The method of any one of the previous claims, wherein the micro-structures comprises microelectromechanical systems, MEMS.

5. A device for two-dimensional local fluid flow measurement over surfaces, comprising:

a set of micro-structures forming a matrix structure, each one of the micro-structures comprising a membrane with an embedded temperature sensitive resistive device;

an electronic unit configured to measure a thermal impedance of each one of the micro-structures in the frequency domain and to obtain a velocity and angle of incidence of a local fluid flow on a target surface on which the device is arranged using an inverse algorithm that uses the measured thermal impedances.

6. The device of claim 5, wherein the matrix structure has a rotation symmetry.

7. The device of claim 5 or 6, wherein the set of micro-structures comprises four micro-structures.

8. The device of any one of claims 5-7, wherein the micro-structures comprises microelectromechanical systems, MEMS.

9. The device of any one of claims 5-8, wherein the device comprises a two-dimensional anemometer.

Fig. 1

Fig. 2

Fig. 3

Fig. 4

Fig. 5

Fig. 6

**Angle and wind velocity estimators**

Fig. 7A

**Angle and wind velocity estimators**

Fig. 7B

Fig. 8A

Fig. 8B

Fig. 9A

Fig. 9B

Europäisches
Patentamt

European
Patent Office

Office européen
des brevets

# EUROPEAN SEARCH REPORT

Application Number

EP 24 38 2639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHU YANQING ET AL: "2-D Micromachined Thermal Wind Sensors-A Review", IEEE INTERNET OF THINGS JOURNAL, IEEE, vol. 1, no. 3, 1 June 2014 (2014-06-01), pages 216-232, XP011549642, DOI: 10.1109/JIOT.2014.2319296 [retrieved on 2014-05-30] * the whole document * | 1-9 | INV. G01P5/10 G01P5/12 G01P13/02 G01F1/684 G01F1/69 ADD. G01P13/00 |
| Y | JIANG F ET AL: "THEORETICAL AND EXPERIMENTAL STUDIES OF MICROMACHINED HOT-WIRE ANEMOMETERS", TECHNICAL DIGEST OF THE INTERNATIONAL ELECTRON DEVICES MEETING. SAN FRANCISCO, DEC. 11 - 14, 1994; [TECHNICAL DIGEST OF THE INTERNATIONAL ELECTRON DEVICES MEETING], NEW YORK, IEEE, US, vol. 1, 11 December 1994 (1994-12-11), pages 139-142, XP000585456, ISBN: 978-0-7803-2112-0 * the whole document * | 1-9 | |
| A | US 7 275 013 B1 (MATLIS ERIC [US] ET AL) 25 September 2007 (2007-09-25) * the whole document * | 1-9 | TECHNICAL FIELDS SEARCHED (IPC) G01P G01F |
| A | XU WEI ET AL: "Bidirectional CMOS-MEMS Airflow Sensor With Sub-mW Power Consumption and High Sensitivity", IEEE TRANSACTIONS ON INDUSTRIAL ELECTRONICS, IEEE SERVICE CENTER, PISCATAWAY, NJ, USA, vol. 69, no. 3, 23 March 2021 (2021-03-23), pages 3183-3192, XP011891787, ISSN: 0278-0046, DOI: 10.1109/TIE.2021.3066945 [retrieved on 2021-12-05] * the whole document * | 1-9 | |

-/--

The present search report has been drawn up for all claims

| Place of search | Date of completion of the search | Examiner |
|---|---|---|
| Munich | 30 October 2024 | Springer, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 38 2639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VAN OUDHEUSDEN B W: "SILICON THERMAL FLOW SENSORS", SENSORS AND ACTUATORS A: PHYSICAL, ELSEVIER BV, NL, vol. A30, no. 1 / 02, 1 January 1992 (1992-01-01), pages 5-26, XP000277705, ISSN: 0924-4247, DOI: 10.1016/0924-4247(92)80192-6 * the whole document * | 1-9 | |
| A | US 2008/271525 A1 (WANG GAOFENG [US] ET AL) 6 November 2008 (2008-11-06) * the whole document * | 1-9 | |

TECHNICAL FIELDS
SEARCHED (IPC)

The present search report has been drawn up for all claims

| Place of search | Date of completion of the search | Examiner |
|---|---|---|
| Munich | 30 October 2024 | Springer, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 38 2639

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2024

| Patent document cited in search report | | Publication date | Patent family member(s) | | Publication date |
|---|---|---|---|---|---|
| US 7275013 | B1 | 25-09-2007 | NONE | | |
| US 2008271525 | A1 | 06-11-2008 | JP | 4504037 B2 | 14-07-2010 |
| | | | JP | 2005215570 A | 11-08-2005 |
| | | | US | 2005206996 A1 | 22-09-2005 |
| | | | US | 2007206254 A1 | 06-09-2007 |
| | | | US | 2007242325 A1 | 18-10-2007 |
| | | | US | 2007285748 A1 | 13-12-2007 |
| | | | US | 2007285749 A1 | 13-12-2007 |
| | | | US | 2007285750 A1 | 13-12-2007 |
| | | | US | 2008271525 A1 | 06-11-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2342953 B1

**Non-patent literature cited in the description**

- **ZHU, YANQING et al.** 2-D micromachined thermal wind sensors-A review. *IEEE Internet of Things Journal*, 2014, vol. 1 (3), 216-232
- **STAINBACK, P.** ; **K. NAGABUSHANA**. Review of hot-wire anemometry techniques and the range of their applicability for various flows. *Electron. J. Fluid Eng. Trans. ASME*, 1993, vol. 167, 1-54
- **HEYD, RODOLPHE et al.** Development of absolute hot-wire anemometry by the 3ω method. *Rev. Sci. Instrum.*, 01 April 2010, vol. 81
- **LIU, HAO-BING et al.** High Sensitivity, Miniature, Full 2-D Anemometer Based on MEMS Hot-Film Sensors. *IEEE Sens. J.*, 21 December 2012, vol. 13 (5), 1914-20
- **DOMÍNGUEZ-PUMAR, M. et al.** Spherical probe for the thermophysical characterization of regoliths for planetary exploration using frequency methods. *Sens. Actuators, A*, 01 December 2022, vol. 348